# EUROPEAN PATENT APPLICATION

(11) **EP 2 942 260 A2**
(43) Date of publication of application: **11.11.2015**
(21) Application number: 15166736.7
(22) Date of filing: 07.05.2015
(51) Int. Cl.: B62B 3/00

(54) **CONTAINER**

(30) Priority: 08.05.2014 GB 201408162
(71) Applicant: K. Hartwall Oy AB, 01150 Söderkulla (FI)
(72) Inventor: Järvi, Mikko, 01150 Söderkulla (FI)
(74) Representative: Seppo Laine Oy

(57) **Abstract**

The present invention provides an improved container for the transport of small parceled items that can manage the contents the container, when the door is opened for unloading of the container. The novel container (1) includes a side frame section (200) and a hinge (600), which pivots a door (100) in respect to the side frame section (200) about a vertical axis for turning the door (100) between a closed and open configuration. The door (100) features a first and second panel element (110, 120), which both include a rectangular frame including a horizontal beam (111, 125). The first panel element (110) is attached to the side frame section (200) through the hinge (600). A pivoting member (140) is arranged to connect the horizontal beams (111, 125) of the first and second panel element (110, 120) and configured to provide a horizontal axis of revolution between the panel elements (110, 120).

## Description

### FIELD OF THE INVENTION

The present invention relates to logistics equipment. In particular, the invention relates to containers for transporting parceled goods, such as letters and small boxes sent by mail. More specifically, the invention relates to a container according to the preamble portion of claim 1.

### BACKGROUND ART

Before delivery to the recipient, mail and generally speaking all logistics items are transported in consolidated units. There are known a vast variety of containers for facilitating such bulk transports. In mail logistics at least, roll containers are the *de facto* solution for transporting letters and packages between and within hubs before the parcel is delivered to the recipient.

Conventional containers include three fixed wall sections and a door, which covers the fourth lateral side of the container. Both the fixed wall sections and the door feature a peripheral frame surrounding a mesh tight enough to safely keep all contents within the container.

A problem associated with conventional roll containers is that when the door is opened, the contents of the container tend to fall out in an uncontrolled manner. The problem is most prominent in mail transport, wherein the letters are stacked on top of each other such that they can easily slide off the container thus creating a large spill.

To address this problem, roll containers have been developed with two independent doors, which are arranged in a superposed configuration. Both doors are vertically hinged to the front edge of the same side frame section such that the hinges enable also vertical displacement for locking the door to the opposing frame section. The top door may therefore be opened independently of the lower door. However, for allowing the lower door to be opened, there has to be clearance between the upper edge of the lower door and the lower edge of the upper door for allowing the lower door to be lifted of a hook for suspending the door to the side frame section. While the double door approach does reduce the number of letters sliding out, such approach has the problem of letters sliding out through the clearance between the doors.

It is therefore an aim of the present invention to provide a container for the transport of small parceled items - particularly letters - that would solve the problem of managing the contents the container, when the door is opened for unloading of the container.

### SUMMARY

The aim of the present invention is achieved with aid of a novel container including a side frame section and a hinge, which pivots a door in respect to the side frame section about a vertical axis for turning the door between a closed and open configuration. The door features a first and second panel element, which both include a rectangular frame including a horizontal beam. The first panel element is attached to the side frame section through the hinge. A pivoting member is arranged to connect the horizontal beams of the first and second panel element and configured to provide a horizontal axis of revolution between the panel elements.

More specifically, the container according to the present invention is characterized by the characterizing portion of claim 1.

Considerable benefits are gained with aid of the present invention. Because the door is made of panel elements, which are hinged together by using their hollow beams, the door may be opened sequentially about the horizontal axis and there is no gap between the panel elements.

### BRIEF DESCRIPTION OF DRAWINGS

In the following, exemplary embodiments of the invention are described in greater detail with reference to the accompanying drawings in which:
Fig. 1 presents an isometric view of a container according to one embodiment,
Fig. 2 presents a detailed view of area A of Fig. 1,
Fig. 3 presents a detailed view of area B of Fig. 1,
Fig. 4 presents the container of Fig. 1 with the top portion open,
Fig. 5 presents a detailed view of area C of Fig. 4,
Fig. 6 presents the container of Fig. 1 with the top and center portions open,
Fig. 7 presents a detailed view of area D of Fig. 6,
Fig. 8 presents the container of Fig. 1 with the top, center and bottom portions open and turned to the side of the roll container, wherein the door is completely open,
Fig.9 presents a detail view of area B according to another embodiment,
Fig. 10 presents a detail view of area C according to another embodiment, and
Fig. 11 presents a detail view of area D according to another embodiment.

### DETAILED DESCRIPTION OF PREFERRED EMBODIMENTS

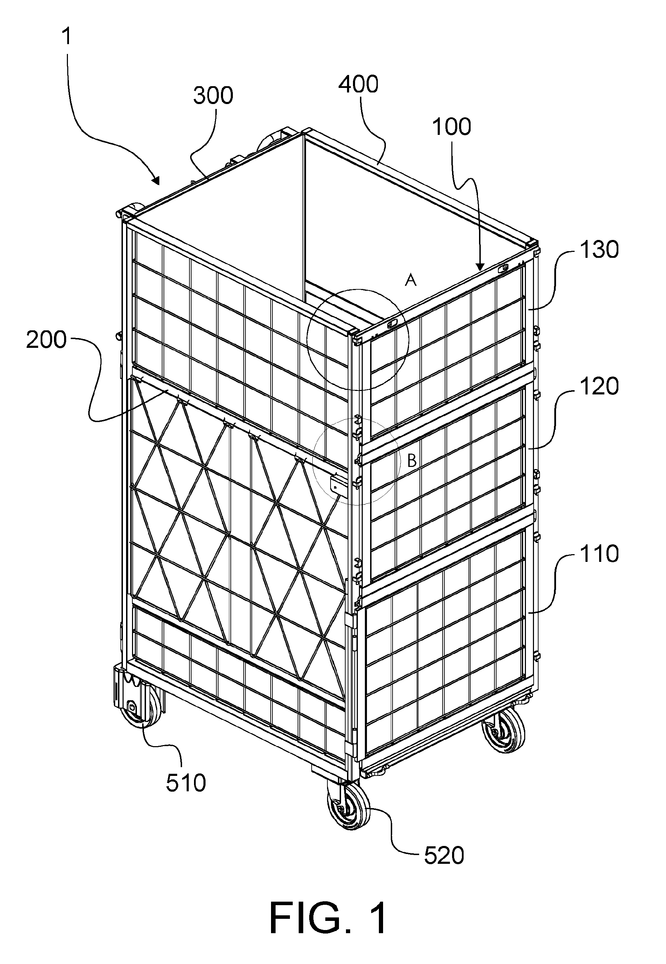

As shown in Fig. 1, a container 1 according to one embodiment includes a fixed first and second side frame section 200, 400 and a rear frame section 300 connecting the two. Each frame section 200, 300, 400 includes a rectangular frame and a mesh for covering the side. The door 100 has three portions, namely a bottom, center and top portions, which are herein referred to as the first, second and third panel elements 110, 120, 130, respectively. In this context a *panel element* is meant to refer to an enclosing element of the container, which extends over at least a portion of a side of the container such to prevent items inside the container from exiting the container. The panel need not be solid, wherein a mere frame with a mesh may fulfill the above requirements. Indeed, as has been shown in the Figs., the panel elements include a rectangular frame of interconnected beams and a mesh delimited by said frame. The panel elements 110, 120, 130 are hinged together horizontally, which is described with greater detail hereafter. The door 100 is hinged vertically to the first side frame section 200 and constructed to lock on to the third side frame section 300 opposing the first side frame section 200. Fig. 1 also shows that the container 1 is preferably equipped with fixed and swivel castors 510, 520, which known in the field *per se,* thus rendering the container a roll container.

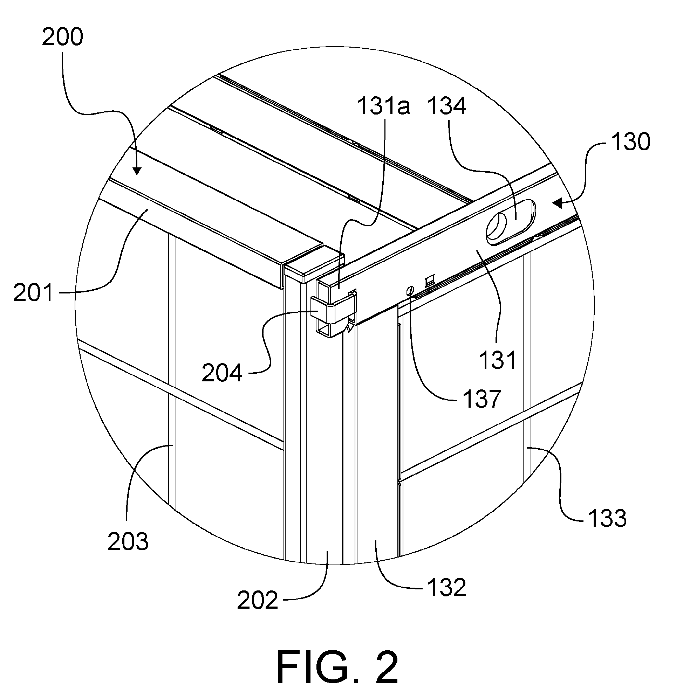

As shown more clearly in Fig. 2, the top portion of the door 100, i.e. the third panel element 130, is suspended from the first side frame section 200. The extension 131a extending from the top horizontal beam 130 of the third panel element 130 is shaped to be vertically inserted to a receptive bracket 204 provided to the front vertical beam 202 of the first side frame section 200. A similar attachment is provided at the other end of the third panel element 130. One locked to the side frame sections 200, 300, the vertical beam 132 of the third panel element 130 makes contact or at least closely flanks the vertical beam 202 of the adjacent side frame section 200. The mesh 133, 203 on both the third panel element 130 and the side frame section 200 is dimensioned to prevent any content, particularly letters, of the container from falling out.

Provided to the top horizontal beam 131 of the third panel element 130 is a releaser 134, which includes a slanted slide (not shown) inside the top horizontal beam 131. The slide is biased to the beam 131 by means of a spring such to bias the slide towards the locked position shown in Fig. 2. At an end of the slide, there is a protrusion extending through an opening in the top horizontal beam 131 and to a receptive opening (not shown) in the bracket 204. Once the releaser 134 is deviated (to the right in Fig. 2) enough to overcome the biasing force, the slide is released from opening in the bracket 204, whereby the third panel element 130 is free to move in respect to the second panel element and to the first side frame section 200 of the container 1. Provided also to the top horizontal beam 131 of the third panel element 130 is a magnet 137 for releasably attaching the panel element to the second panel element 120, i.e. to the center portion.

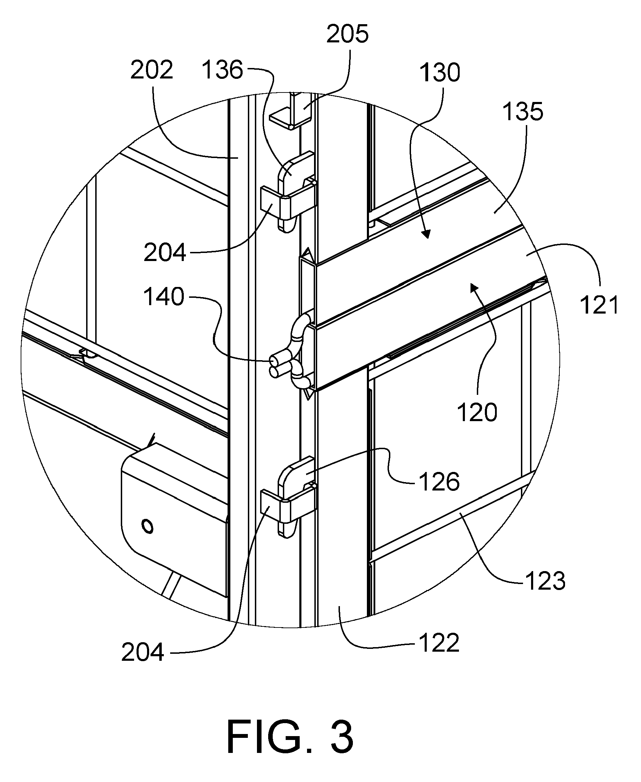

The second and third panel element 120, 130 are horizontally hinged together through a pivoting member 140 (Fig. 3). The pivoting member 140 includes to elongated pieces that run in the hollow bottom horizontal beam 135 of the third panel element 130 and in the adjacent and parallel hollow top horizontal beam 121 of the second panel element 120. The elongated pieces are joined together outside the hollow beams 121, 135. The elongated pieces of the pivoting member 140 are spaced apart by a distance such that the third panel element 130 may be elevated from the second panel element 120 by a height corresponding to said distance without excreting any lifting force to the second panel element 120. The pivoting member 140 is attached to the second and third panel element 120, 130 such that the horizontal beams 121, 135 may be pivoted in respect to each other and in respect to the pivoting member 140, whereby the panel elements 120, 130 may be pivoted in respect to each other about a horizontal rotation axis.

Fig. 3 also shows how the second and third panel elements 120, 130 are suspended to the first side frame section 200. The vertical beam 202 of the side frame section 200 has brackets 204 arranged at suitable heights to receive the anchors 126, 136 of the second and third panel element 120, 130, respectively. The anchors 126, 135 have a vertical extension, which has been dimensioned with the pivoting member 140 such that the clearance between the elongated pieces of the pivoting member 140 is no shorter than the vertical extension of the anchor 126, 136. When elevated, the vertical extension of the anchor 136 escapes the bracket 204, whereby the pivoting member 140 is similarly elevated by the bottom horizontal beam 135 of the third panel element 130. Due to the vertical clearance between the elongated pieces of the pivoting element 140 and to the vertical extent of the inner cavity of the top horizontal beam 121 of the second panel element 120, the second panel element 120 is not elevated. Thus, the third panel element 130 may be freely elevated and rotated in respect to the second panel element 120.

However, the front vertical beam 202 of the first side frame section 200 has been provided with a limiter 205 for limiting the vertical movement of the third panel element 130. The limiter 205 is a projection from the front vertical beam 202 of the first side frame section 200 arranged at a distance from the bracket 204. The distance is dimensioned to be no greater than the vertical extent of the inner cavity of the top horizontal beam 121 of the second panel element 120. The limiter 205 therefore prevents the third panel element 130 to be lifted high enough that the pivoting member 140 would begin to lift the second panel element 120.

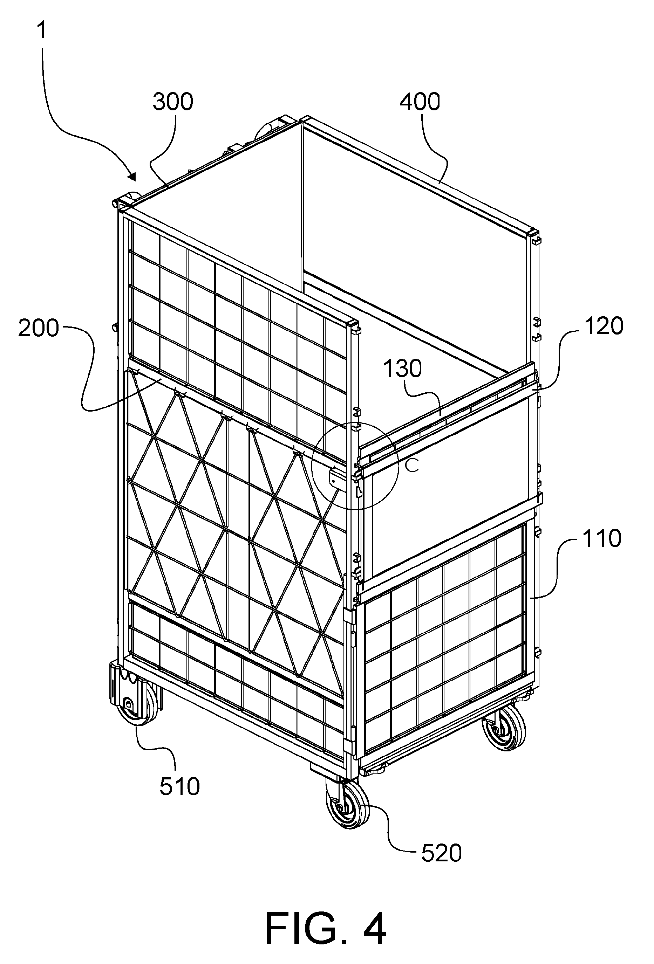

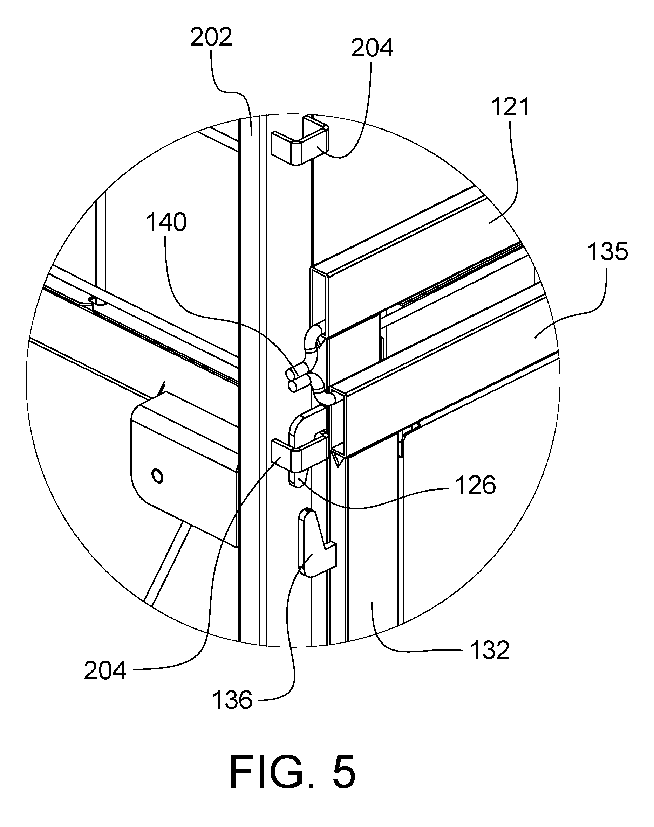

Accordingly, when the third panel element 130 is opened, it is firstly released from the side frame panels 200, 300 by moving the releaser, where after the panel element 130 is elevated to release the anchor 136 and the extension 131a of the top horizontal beam 131 from the brackets 204. The panel element 130 is secondly rotated about the horizontal rotation axis created by the pivoting member 140 in respect to the second panel element 120. Fig. 4 shows the container with the third panel element 130 opened. Fig. 5 shows, how the third panel element 130 is suspended by from the second panel element 120 by the pivoting member 140 there between. While not shown in the Figs., it is to be pointed out that the third panel element 130 is releasably locked to flank the second panel element 120 by virtue of the magnet 137 disposed to the top horizontal beam of the third panel element 130.

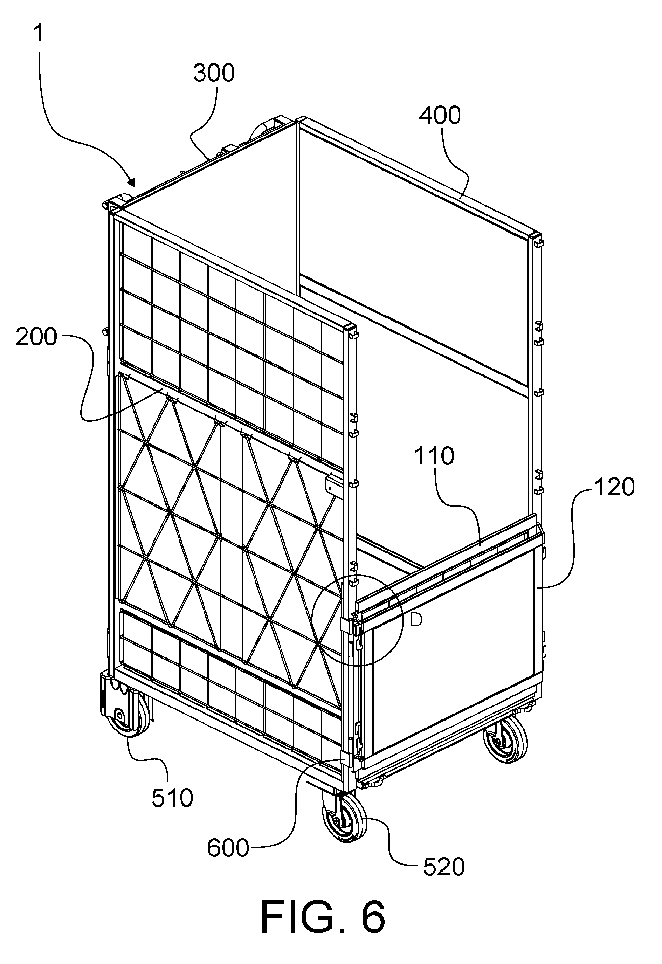

Compared to the third panel element 130, the second panel element 120 features similar locking and pivoting mechanisms in respect to the side frame sections 200, 300 and the first panel element 110. The second panel element 120 does not, however, include an extended top horizontal beam. The second panel element 120 may therefore be similarly opened by folding it down about the horizontal rotation axis created by the pivoting member connecting the hollow top horizontal beams of the second and first panel elements 120, 110. Because the third panel element 130 is attached to the second panel element 120 by means of the magnet 137, the third panel element 130 is also pivoted in respect to the first panel element 110 carried by the second panel element 120. Fig. 6 shows the roll container opened two thirds such that both the third and second panel elements are folded open.

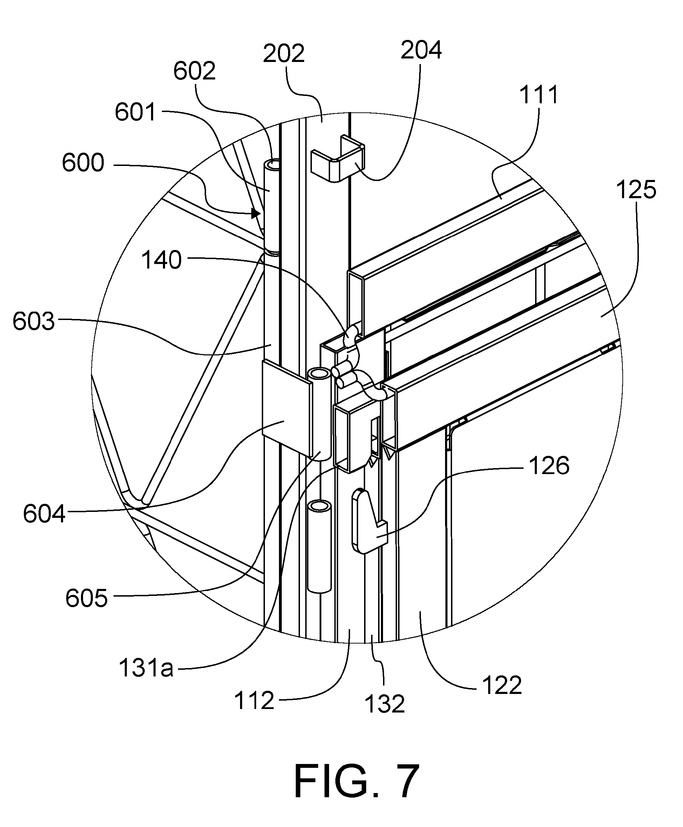

Turning now to Fig. 7, which shows the relationship between the panel elements 110, 120, 130 in a folded configuration. As can be seen, the pivoting member 140 connects the top horizontal beams 111, 125 similarly as described above between the second and third panel elements 120, 130. Once in such a folded arrangement, the first panel element 110 lies on the inside of the pack, whereas the second panel element 120 lies on the outside with the third panel element 130 being in between.

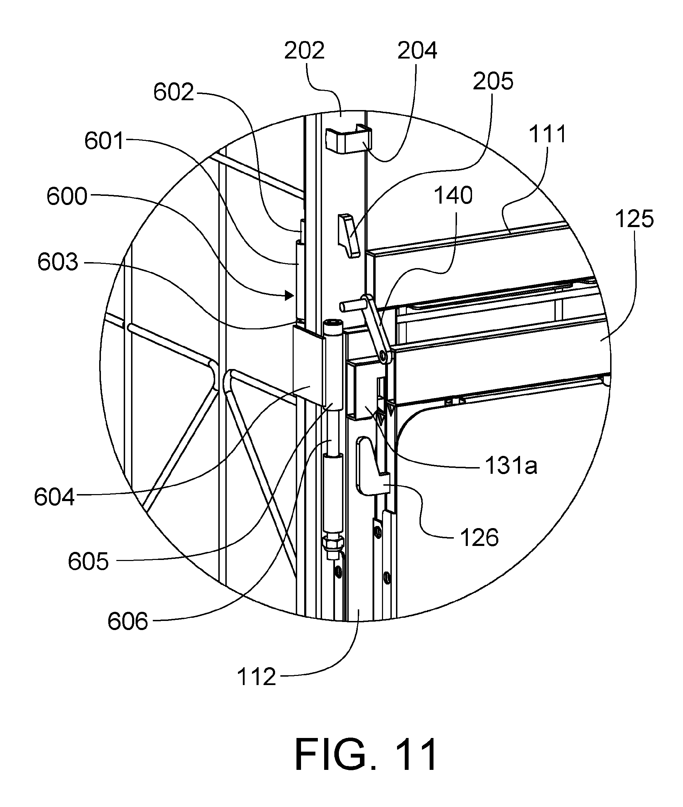

Fig. 7 further illustrates how the door 100, namely the first panel element 110 is hinged to the first side frame section 200. The rear surface of the front vertical beam 202 of the first side frame section 200 has been provided with frame sleeves 601 with a main sleeve 603 hinged there between via a pin 602. The main sleeve 603 is attached to a door sleeve 605 via a leaf 604. The first panel element 110 also has a second door sleeve 605 connected to the first door sleeve 605 with a pin (shown at 606 in Fig. 11). The first panel element 110 may therefore be pivoted about a vertical axis along the door sleeves 605 and a second vertical axis along the frame sleeves 601, with the two vertical axes being horizontally separated by the leaf 604.

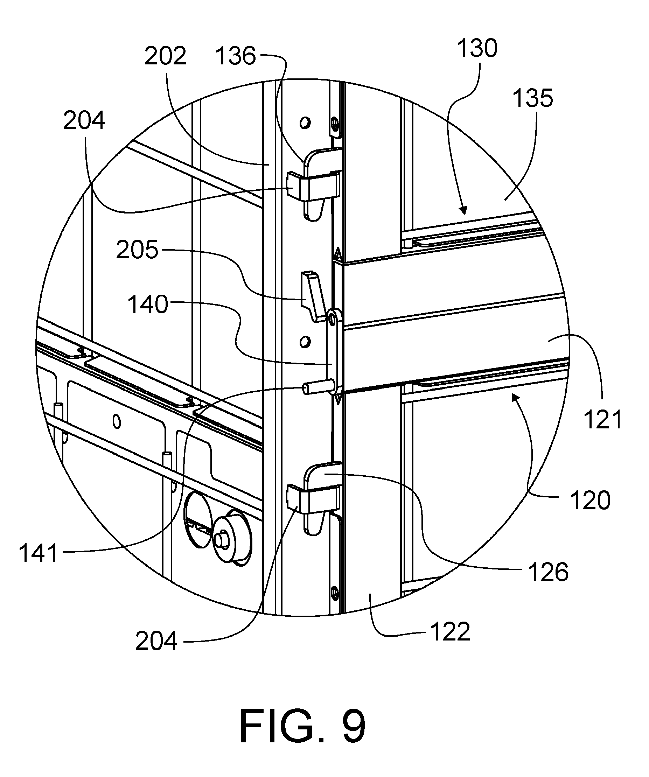

Figs. 3, 5 and 7 illustrate an embodiment for constructing the pivoting member 140 from two parallel pins joined together at one end. Figs. 9 to 11 show an alternative embodiment to the example shown in Figs. 3, 5 and 7, respectively.

Fig. 9 presents the pivoting member 140 in an upright orientation between the second and third panel element 120, 130. As in the example shown in Figs. 3, 5 7, the pivoting member 140 includes two pins that run parallel and that are joined together at one end. Instead of being shaped to merge at the end facing the hinge of the door 100, the pivoting member 140 includes a separate bond piece. The bond piece is in the illustrated example equipped with a horizontal extension 141 for making contact with a limiter 205 provided to the front vertical beam 202 of the first side frame section 200 similarly to the limiter arrangement shown in connection with Figs. 3, 5 and 7.

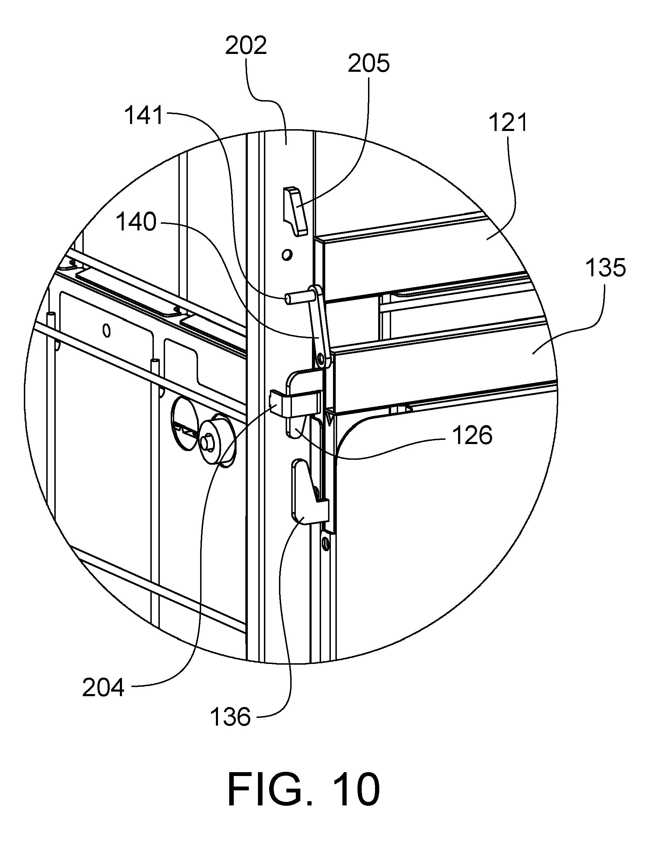

Fig. 10 shows the pivoting member 140 according to the second embodiment in an angled orientation between the second and third panel element 120, 130, when the third panel element 130 is opened and flanking the second panel element 120. Fig. 11 shows the pivoting member 140 according to the second embodiment in an angled orientation between the first and second panel element 110, 120, when the second panel element 120 is opened and flanking the first panel element 110.

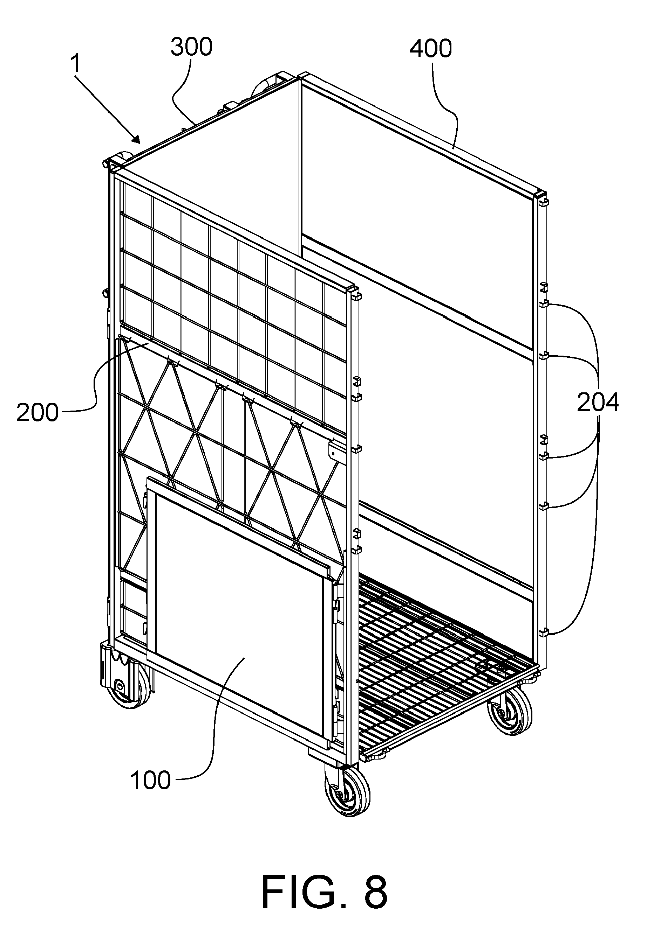

Regardless of which type of a pivoting member 140 is used, the door 100 may be completely opened by lifting the first panel element 110 to release it from the brackets 204 and pivoting the stack of folded panel elements 110, 120, 130 about the pins 602 to turn the door 100 to flank the first frame section 200, as shown in Fig. 8. The anchors used to suspend the door 100 - namely the first panel element 110 thereof - to the brackets 204 of the second side frame section 300 may be used to suspend the door 100 to the first side frame section 200, which may be equipped with receptive brackets (not shown). Alternatively, the rear surface of a horizontal beam 121, 125 of the second panel element 120, which is the outermost panel element in the folded configuration, may be provided with a magnetic coupling (not shown) for releasably attaching the door 100 to the first side frame section 200.

The door 100 is closed in a reversed order. First, the door 100 is turned about the pins 602 back to connect the first and second side frame section 200, 300. The door is simultaneously lifted, where after the free end of the first panel element 110 is aligned with the brackets 204 provided to the vertical front beams of the first and second side frame section 200, 300 (Fig. 6). The door 100 is suspended to the side frame sections 200, 300 by dropping the anchors into the receptive brackets. Secondly, the second panel element 120 is pivoted in respect to the first panel element 110 about the pivoting member 140 from the flanking parallel position into the superposed aligned position, where after the second panel element 120 is dropped for inserting the anchors 126 into the receptive brackets 204 for locking the second panel element 120 to the side frame sections 200, 300 (Fig. 4). In such a configuration the bottom horizontal beam 125 of the second panel element 120 rests against the top horizontal beam 111 of first panel element 110. Thirdly, the third panel element 130 is released from the flanking position by exceeding the holding force between the magnet 137 and the metal structure of the second panel element 120. Being detached from the second panel element 120, the first panel element 110 is pivoted in respect to the second panel element 120 about the pivoting member 140 from the flanking parallel position into the superposed aligned position, where after the third panel element 130 is dropped for inserting the anchors 126 into the receptive brackets 204 for locking the third panel element 130 to the side frame sections 200, 300 (Fig. 1). Simultaneously the extension 131a of the top horizontal beam 131 of the third panel element 130 is inserted into the receptive bracket 204. In such a configuration the bottom horizontal beam 135 of the third panel element 130 rests against the top horizontal beam 121 of second panel element 120.

**TABLE 1: LIST OF REFERENCE NUMBERS.**

| **Number** | **Part** | **Number** | **Part** |
|---|---|---|---|
| 1 | roll container | 140 | pivoting member |
| 100 | door | 141 | horizontal extension |
| 110 | first panel element | 200 | first side frame section |
| 111 | top horizontal beam | 201 | top horizontal beam |
| 112 | vertical beam | 202 | front vertical beam |
| 120 | second panel element | 203 | mesh |
| 121 | top horizontal beam | 204 | bracket |
| 122 | vertical beam | 205 | limiter |
| 123 | mesh | 300 | rear frame section |
| 125 | bottom horizontal beam | 400 | second side frame section |
| 126 | anchor | 510 | fixed castor |
| 130 | third panel element | 520 | swivel castor |
| 131 | top horizontal beam | 600 | hinge |
| 131a | extension | 601 | frame sleeve |
| 132 | vertical beam | 602 | pin |
| 133 | mesh | 603 | main sleeve |
| 134 | releaser | 604 | leaf |
| 135 | bottom horizontal beam | 605 | door sleeve |
| 136 | anchor | 606 | pin |
| 137 | magnet | | |

## Claims

1. A container (1) comprising:
- a side frame section (200),
- a door (100), and
- a hinge (600), which is configured to pivot the door (100) in respect to the side frame section (200) about a vertical axis for turning the door (100) between a closed and open configuration,
**characterized in that** the door (100) comprises:
- a first panel element (110), which is attached to the side frame section (200) through the hinge (600), and which first panel element (110) comprises a rectangular frame including a hollow horizontal beam (111),
- a second panel element (120), which comprises a rectangular frame including a horizontal beam (125), and
- a pivoting member (140) connecting the horizontal beams (111, 125) of the first and second panel element (110, 120) and configured to provide a horizontal axis of revolution between the panel elements (110, 120).

2. The container (1) according to claim 1, wherein the pivoting member (140) is configured to provide rotation between the first and second panel element (110, 120) between a superposed position and a flanking position.

3. The container (1) according to claim 1 or 2, wherein:
- the horizontal beams (111, 125) of the first and second panel element (110, 120) each include a cavity, which extends horizontally and has a transversal extension, and wherein
- the pivoting member (140) comprises:
• two elongated and parallel pins, which are adapted to run in the horizontal beams (111, 125) of the first and second panel element (110, 120) and to allow rotation between the pins and the beams (111, 125), and
• a connecting part connecting the pins at a distance from each other.

4. The container (1) according to any of the preceding claims, wherein:
- the second panel element (120) comprises an anchor (126) provided to the frame of the second panel element (120), and wherein
- the side frame section (200) comprises a bracket (204) provided to a vertical beam (202) of the side frame section (200), which bracket (204) is configured to engage with the anchor (126) of the second panel element (120) and to support the second panel element (120) vertically.

5. The container (1) according to claim 4, wherein the anchor (126) has a horizontal protrusion and a vertical protrusion, which has a length less than the transversal extension of the top horizontal beam (111) of the first panel element (110).

6. The container (1) according to claim 4 or 5, wherein the bracket (204) is configured to receive the anchor (126) in a dropping manner so as to allow only a lifting motion of the second panel element (120).

7. The container (1) according to any of the preceding claims 3 to 6, wherein the distance between the pins is greater than the vertical protrusion of the anchor (126).

8. The container (1) according to any of the preceding claims, wherein the second panel element (120) includes a top horizontal beam, and wherein the roll container (1) comprises a third panel element (130), which comprises a rectangular frame including a horizontal beam (125), wherein another pivoting member (140) connects the horizontal beams (121, 135) of the second and third panel element (120, 130) and is configured to provide a horizontal axis of revolution between the panel elements (120, 130).

9. The container (1) according to claim 8, wherein the top horizontal beams (131) of second panel element (120) includes a cavity, which extends horizontally and has a transversal extension.

10. The container (1) according to claim 8 or 9, wherein:
- the third panel element (130) comprises a similar anchor (136) as that of the second panel element (120), and wherein
- the side frame section (200) comprises a bracket (204) provided to a vertical beam (202) of the side frame section (200), which bracket (204) is configured to engage with the anchor (126) of the second panel element (120) and to support the second panel element (120) vertically.

11. The container (1) according to claim 8, 9 or 10, wherein:
- the frame of the third panel element (130) comprises a top horizontal beam (131) with a lateral extension (131a) having a vertically extending portion,
- the side frame section (200) comprises a top bracket (204) provided to a vertical beam (202) of the side frame section (200), which bracket (204) is configured to engage with the vertically extending portion of the lateral extension (131a) of the top horizontal beam (131) of the third panel element (130) and to support the third panel element (120) vertically.

12. The container (1) according to any of the preceding claims 8 to 11, wherein a limiter (205) has been provided to the vertical beam (202) of the side frame section (200) so as to limit the vertical movement of the second panel element (120).

13. The container (1) according to any of the preceding claims 8 to 12, wherein the pivoting member (140) is configured to provide rotation between the second and third panel element (120, 130) between a superposed position and a flanking position, in which flanked position the top horizontal beam (131) of the third panel element (130) is secured to the bottom horizontal beam of the second panel element (120) by means of a magnet (137) provided to either panel element.

14. The container (1) according to any of the preceding claims 8 to 13, wherein the third panel element (130) is taller than the second panel element (120), which is taller than the first panel element (110).

15. The container (1) according to any of the preceding claims, wherein the hinge (600) is configured to pivot the door (100) in respect to the side frame section (200) about a vertical axis for turning the door (100) between a closed configuration, where the door (100) is orthogonal to the side frame section (200), and a flanking open configuration, where the door (100) is parallel to the side frame section (200).

16. The container (1) according to any of the preceding claims, wherein the container (1) is a roll container.
